# EUROPEAN PATENT SPECIFICATION

(11) **EP 3 794 066 B1**
(45) Date of publication and mention of the grant of the patent: **11.09.2024**
(21) Application number: 19727743.7
(22) Date of filing: 13.05.2019
(51) Int. Cl.: C08K 3/04, C08L 23/04

(54) **POLYMER COMPOSITION WITH IMPROVED BARRIER PROPERTIES**
POLYMERZUSAMMENSETZUNG MIT VERBESSERTEN BARRIEREEIGENSCHAFTEN
COMPOSITION DE POLYMÈRES PRÉSENTANT DES PROPRIÉTÉS BARRIÈRE AMELIORÉES

(30) Priority: 14.05.2018 IT 201800005319
(43) Date of publication of application: 24.03.2021
(73) Proprietor: Versalis S.p.A., 20097 San Donato Milanese (MI) (IT)
(72) Inventor: SCAVELLO, Francesco, 46100 Mantova (MN) (IT); BALDUCCI, Daniele, 20097 San Donato Milanese (MI) (IT); CASTIGLIONI, Andrea, 46100 Mantova (MN) (IT); MARIANI, Paolo, 20097 San Donato Milanese (MI) (IT)
(74) Representative: Studio Torta S.p.A.
(86) International application number: PCT/IB2019/053916
(87) International publication number: WO 2019/220303

(56) References cited:
- EP-A1- 2 395 043
- EP-A1- 2 631 260
- WO-A2-2014/091309
- CN-A- 107 474 376

## Description

The present invention relates to a polymer composition with improved barrier properties. More in particular, the present invention relates to a polymer composition comprising: (a) at least one homopolymer or copolymer of ethylene; (b) a paste with a high concentration of an exfoliated layered material comprising: (i) at least one exfoliated layered material, (ii) at least one first additive selected from liquid stabilizers at room temperature and, optionally, (iii) at least one organic solvent and/or (iv) at least one second additive selected from: light stabilizers, ultraviolet ray stabilizers (UV absorbers), metallic stearates, alcohols, ketones, ethers, glycols or poly-alkylene glycols.

Said polymer composition can be advantageously used for producing manufactured articles, such as films or slabs, having improved barrier properties and good mechanical properties. Said polymer composition can also be advantageously used for producing manufactured articles, such as films or slabs, having good electrical conductivity properties. Said films or slabs can, in turn, be advantageously used in various applications such as, for example, the production of manufactured articles with reduced gas permeability for packaging and tanks, or manufactured articles with improved electrical conductivity for 3D printing applications, or manufactured articles with improved electromagnetic radiation shielding (EMI shielding).

Consequently, the present invention also relates to the manufactured articles obtained from the aforesaid polymer composition.

Further subject matter of the present invention is also a process for the preparation of said polymer composition.

Polymer compositions having good barrier properties, and/or good mechanical properties, and/or good electrical conductivity properties, are known in the state of the art.

For example, international patent application WO 2014/091309 describes a polymer composition comprising: from about 99.89% by weight to 65% by weight of a polyolefin resin; from about 0.01% by weight to 5% by weight of a nucleating agent or a clarifying agent; from about 0.1% by weight to 30% by weight of a filler that can be selected from mica and/or clay and/or graphite and/or graphene. The aforesaid polymer composition is said to have improved barrier properties to gas, volatile organic compounds and water vapor.

International patent application WO 2014/144139 describes a masterbatch for preparing a nanocomposite polymer, said masterbatch comprising a polymer and at least 15% by weight of graphite. In said patent application, examples are provided, among others, related to the preparation of a graphene/linear-low-density polyethylene (LLDPE) composite and a graphene-high-density polyethylene (HDPE) composite: said composites are extruded obtaining films which, when subjected to analysis for the purpose of measuring the tensile properties thereof, are said to display an improvement both in relation to the elongation at yield and to the elongation at break.

European patent application EP 2 631 260 describes a process for preparing a composition comprising graphene and at least one polymer, said process comprising the steps of: (i) providing an aqueous suspension of graphene (dispersion G); (ii) mixing the dispersion (G) with an aqueous polymer lattice obtaining an aqueous mixture (mixture M); (iii) co-coagulating the mixture (M) obtaining said composition. The films obtained from the aforesaid composition display higher barrier properties with respect to those of films obtained from polymers without graphene added.

International patent application WO 2011/144321 describes a process for preparing a polymer composition comprising a polymer and graphene, comprising the steps of: A) providing an aqueous dispersion of graphene, said dispersion comprising a non-ionic surfactant; B) mixing the graphene dispersion with an aqueous lattice of the polymer or with a water soluble or dispersible precursor of the polymer; C) removing water from the mixture obtained; D) heating the product obtained in step C) to the temperature wherein the polymer is able to flow or wherein the polymer is formed by its precursor(s); and E) processing and/or solidifying the product of step D) in the desired form. The polymer composition obtained is said to be usable in different applications wherein its mechanical and barrier properties are advantageously exploited, as well as other properties such as, for example, conductivity, flame retarding and heat conduction.

As polymer compositions usable for producing manufactured articles, such as films or slabs, having improved barrier properties and/or mechanical properties, and/or good electrical conductivity properties, can be used for various applications, their study, like the study of new processes for obtaining them, is still of great interest.

The Applicant therefore set out to find a new polymer composition that can be used for producing manufactured articles, such as films or slabs, having improved barrier properties, and/or good mechanical properties, and/or good electrical conductivity properties.

The Applicant has now found a polymer composition comprising: (a) at least one homopolymer or copolymer of ethylene; (b) a paste with a high concentration of exfoliated layered material which can be advantageously used for producing manufactured articles such as, for example, films or slabs, having improved barrier properties and good mechanical properties. Said polymer composition can also be advantageously used for producing manufactured articles such as, for example, films or slabs, having good electrical conductivity properties. Said films or slabs can, in turn, be advantageously used in various applications such as, for example, the production of manufactured articles with reduced gas permeability for packaging and tanks, or manufactured articles with improved electrical conductivity for 3D printing applications, or manufactured articles with improved electromagnetic radiation shielding (EMI shielding). Furthermore, said paste with a high concentration of exfoliated layered material can be added directly to said homopolymer or copolymer of ethylene without having to be subjected to treatments for removing the solvent. Furthermore, said paste with a high concentration of exfoliated layered material makes it possible to work in the absence of nanometric powders and, therefore, its use is advantageous both from an environmental point of view, and from the point of view of operators' health.

Therefore the subject matter of the present invention is a polymer composition comprising:
(a) at least one homopolymer or copolymer of ethylene;
(b) at least one paste with a high concentration of an exfoliated layered material comprising:
   (i) from 1% by weight to 20% by weight, preferably from 10% by weight to 18% by weight, of at least one exfoliated layered material selected from graphene; graphene oxide; reduced graphene oxide; graphene nanoplates; boron nitride; phosphorene (monoatomic layer of black phosphorus); di- and tri-chalcogenides of transition metals such as tungsten disulfide (IV), tungsten diselenide (VI), molybdenum disulfide, bismuth tellurium; or mixtures thereof; preferably, it is selected from graphene, graphene nanoplates, or mixtures thereof;
   (ii) from 10% by weight to 90% by weight, preferably from 15% by weight to 85% by weight, of at least one first additive selected from liquid stabilizers at room temperature, said at least one first additive being selected from: (ii₁) phenol-based antioxidants such as sterically hindered phenols; (ii₂) antioxidants based on organic phosphites;
   (iii) from 0% by weight to 15% by weight, preferably from 3% by weight to 8% by weight, of at least one organic solvent;
   (iv) from 0% by weight to 30% by weight, preferably from 5% by weight to 20% by weight, of at least one second additive selected from: light stabilizers, ultraviolet ray stabilizers (UV absorbers), metallic stearates, alcohols, ketones, ethers, glycols or poly-alkylene glycols;
   the sum of (i) + (ii) + (iii) + (iv) being equal to 100.

For the purpose of the present description and of the following claims, the definitions of the numeric ranges always include the extremes unless specified otherwise.

For the purpose of the present description and of the following claims, the term "comprising" also includes the terms "which essentially consists of" or "which consists of". According to a preferred embodiment of the present invention, said polymer composition comprises:
(a) from 90% by weight to 99.9% by weight, preferably from 95% by weight to 98% by weight, of at least one homopolymer or copolymer of ethylene;
(b) from 0.1% by weight to 10% by weight, preferably from 2% by weight to 5% by weight, of at least one paste with a high concentration of an exfoliated layered material comprising:
   (i) from 1% by weight to 20% by weight, preferably from 10% by weight to 18% by weight, of at least one exfoliated layered material;
   (ii) from 10% by weight to 90% by weight, preferably from 15% by weight to 85% by weight, of at least one first additive selected from liquid stabilizers at room temperature;
   (iii) from 0% by weight to 15% by weight, preferably from 3% by weight to 8% by weight, of at least one organic solvent;
   (iv) from 0% by weight to 30% by weight, preferably from 5% by weight to 20% by weight, of at least one second additive selected from: light stabilizers, ultraviolet ray stabilizers (UV absorbers), metallic stearates, alcohols, ketones, ethers, glycols or poly-alkylene glycols;
   the sum of (i) + (ii) + (iii) + (iv) being equal to 100.

According to a preferred embodiment of the present invention, said homopolymer or copolymer of ethylene can be selected, for example, from:
- high-density polyethylene (HDPE);
- medium-density polyethylene (MDPE);
- low-density polyethylene (LDPE);
- linear-low-density polyethylene (LLDPE), very-low-density polyethylene (VLDPE), ultra-low-density polyethylene (ULDPE), which are copolymers of ethylene with at least one aliphatic α-olefin having the formula CH₂=CH-R wherein R represents a linear or branched alkyl group, preferably linear, containing from 1 to 12 carbon atoms, selected, for example, from: propylene, 1-butene, 1-pentene, 1-hexene, 1-octene, 1-decene;
or mixtures thereof.

According to a particularly preferred embodiment of the present invention, said homopolymer or copolymer of ethylene is linear-low-density polyethylene (LLDPE). Examples of homopolymers or copolymers of ethylene that can be advantageously used in the present invention and that are currently available on the market are the products Flexirene^{®}, Riblene^{®}, Eraclene^{®}, Clearflex^{®} by Versalis; MDPE HT 514 by Total Petrochemical; Engage^{®} by DuPont-Dow Elastomers; Exact^{®} by Exxon Chemical.

The homopolymers or copolymers of ethylene mentioned above may be obtained through polymerization techniques known in the state of the art, in presence of Ziegler-Natta catalysts, or in presence of chromium catalysts, or in presence of single-site catalysts such as, for example, metallocene or hemi-metallocene catalysts, or through radical processes.

According to a preferred embodiment of the present invention, said paste with a high concentration of an exfoliated layered material comprises:
(i) from 1% by weight to 20% by weight, preferably from 10% by weight to 18% by weight, of at least one exfoliated layered material;
(ii) from 10% by weight to 90% by weight, preferably from 15% by weight to 85% by weight, of at least one first additive selected from liquid stabilizers at room temperature;
(iii) from 2% by weight to 15% by weight, preferably from 3% by weight to 8% by weight, of at least one organic solvent;
the sum of (i) + (ii) + (iii) being equal to 100.

According to a further preferred embodiment of the present invention, said paste with a high concentration of an exfoliated layered material comprises:
(i) from 1% by weight to 20% by weight, preferably from 10% by weight to 18% by weight, of at least one exfoliated layered material;
(ii) from 10% by weight to 90% by weight, preferably from 15% by weight to 85% by weight, of at least one first additive selected from liquid stabilizers at room temperature;
(iv) from 1% by weight to 30% by weight, preferably from 5% by weight to 20% by weight, of at least one second additive selected from: light stabilizers, ultraviolet ray stabilizers (UV absorbers), metallic stearates, alcohols, ketones, ethers, glycols or poly-alkylene glycols;
the sum of (i) + (ii) + (iv) being equal to 100.

According to a further preferred embodiment of the present invention, said paste with a high concentration of an exfoliated layered material comprises:
(i) from 1% by weight to 20% by weight, preferably from 10% by weight to 18% by weight, of at least one exfoliated layered material;
(ii) from 10% by weight to 90% by weight, preferably from 15% by weight to 85% by weight, of at least one first additive selected from liquid stabilizers at room temperature;
(iii) from 2% by weight to 15% by weight, preferably from 3% by weight to 8% by weight, of at least one organic solvent;
(iv) from 1% by weight to 30% by weight, preferably from 5% by weight to 20% by weight, of at least one second additive selected from: light stabilizers, ultraviolet ray stabilizers (UV absorbers), metallic stearates, alcohols, ketones, ethers, glycols or poly-alkylene glycols;
the sum of (i) + (ii) + (iii) + (iv) being equal to 100.

According to the present invention, said at least one exfoliated layered material (i) is selected from: graphene; graphene oxide; reduced graphene oxide; graphene nanoplates; boron nitride; phosphorene (monoatomic layer of black phosphorus); di- and tri-chalcogenides of transition metals such as, for example, tungsten disulfide (IV), tungsten diselenide (VI), molybdenum disulfide, bismuth tellurium; or mixtures thereof. Preferably, said at least one exfoliated layered material (a) is selected from graphene, graphene nanoplates, or mixtures thereof.

For the purpose of the present invention, said exfoliated layered material (i) can be prepared through exfoliation processes in the liquid phase known in the state of the art such as, for example, wet-jet milling, ultra-sonication, shear mixing. Preferably, said exfoliated layered material can be prepared through wet-jet milling: more details related to said wet-jet milling can be found, for example, both in international patent application WO 2017/089987 and in the examples which follow. Generally, said wet-jet milling comprises the exfoliation of a layered material (for example, graphite) using shear forces that are generated thanks to the passage of said layered material, appropriately dispersed in an organic solvent [for example, N-methyl-2-pyrrolidinone (NMP)], through a micronization device (known as a nozzle), adapted to generate forces that can compress the dispersion of layered material/organic solvent obtained. By checking the chemical/physical parameters of the dispersing medium used (i.e. said organic solvent) and the fluid dynamic parameters of the dispersion (i.e. layered material/organic solvent dispersion), it is possible to process said layered material by exposing it to one or more wet-jet-milling cycles through said micronization device (i.e. nozzle). Subsequently, said dispersing medium (i.e. said organic solvent) is removed through the use of a rotating evaporator and the exfoliated material obtained is dispersed again in an organic solvent suitable for the subsequent freeze-drying [for example, dimethylsulfoxide (DMS)] in order to obtain a powder comprising flakes of exfoliated layered material.

For the purpose of the present description and of the following claims, said exfoliated layered material is defined dimensionally with reference to a system of Cartesian axes x, y and z, meaning that the particles that compose it are substantially flat platelets but that can also have an irregular shape. In any case, the lateral dimension and thickness provided with reference to directions x, y and z, are to be considered the maximum dimensions in each of the aforesaid directions.

The lateral dimensions (x, y) of the particles of said exfoliated material are determined by direct measurement with the Transmission Electron Microscope - TEM. For that purpose, an aliquot of the dispersion obtained through wet-jet milling is picked and diluted appropriately, for example with a dilution ratio of 1:1000 with the same organic solvent used for the exfoliation process. After depositing a drop on a suitable grid for an electronic microscope, it is possible to obtain images of the flakes of exfoliated material, using the aforesaid transmission electron microscope - TEM. Through processing software coupled to said microscope, the lateral dimensions of the flakes of exfoliated material are measured and said dimensions are calculated from statistical data deriving from the analysis of at least a hundred flakes.

The thickness (z) of the particles of said exfoliated layered material was determined with an Atomic Force Microscope - AFM, which is essentially a profilometer with sub-nanometer resolution, widely used for the (mainly morphological) characterization of surfaces and nanomaterials. This type of analysis is commonly used to evaluate the thickness of flakes of exfoliated layered material, in particular graphene, obtained according to any process reported above, and therefore to obtain the number of layers of which they are composed. For that purpose, an aliquot of the dispersion obtained through wet-jet milling is picked and diluted appropriately, for example with a dilution ratio of 1:30 with the same organic solvent used for the exfoliation process. 100 microliters of the sample thus obtained are deposited on a silicon wafer that is dried at a temperature of 50°C, for a night and then subjected to scanning through an atomic force microscope - AFM (AFM Bruker Innova) in tapping mode. Through processing software coupled to said microscope, the thicknesses of the flakes of exfoliated material are measured and said dimensions are calculated from statistical data deriving from the analysis of at least a hundred flakes.

According to a preferred embodiment of the present invention, the particles of said exfoliated layered material (i) have a lateral dimension (x, y) not higher than 10000 nm, preferably ranging from 4 nm to 5500 nm.

According to a preferred embodiment of the present invention, the particles of said exfoliated layered material (i) have a thickness (z) not higher than 50 nm, preferably ranging from 0.2 nm to 15 nm.

It is to be noted that, in any case, the lateral dimension is always a lot higher than the thickness (x, y > z).

According to a preferred embodiment of the present invention, the particles of said exfoliated layered material (i) have a surface area higher than 10 m²/g, preferably higher than 40 m²/g.

According to a particularly preferred embodiment of the present invention, the particles of said exfoliated layered material (a) have a surface area ranging from 20 m²/g to 3000 m²/g, preferably ranging from 30 m²/g to 2600 m²/g.

The surface area was measured according to the BET nitrogen adsorption method. According to a preferred embodiment of the present invention, said first additive selected from liquid stabilizers at room temperature (ii) can be selected, for example, from:
(ii₁) phenol-based antioxidants, such as sterically hindered phenols such as, for example, 2,6-di-t-butyl-4-methyl-phenol, 2,6-di-t-butyl-4-nonyl-phenol, 2,2'-methylene-bis-(4-methyl-6-t-butyl-phenol), 4,4'-butylidene-bis- (2-t-butyl-5-methylphenol), 4,4'-thio-bis-(2-t-butyl-5-methyl-phenol), 2,2'-thio-bis(6-*t*-butyl-4-methylphenol), 2,5-di-*t*-amyl-hydroquinone; sterically hindered polymer phenols; tris-(3,5-di-t-butyl-4-hydroxybenzyl) isocyanurate, 2,2'-thiodietylbis-(3,5-di-*t*-butyl-4-hydroxyphenyl)propionate, 1,1,3-tris-(2'-methyl-4'-hydroxy-5'-*t*-butyl-phenyl)butane, 2,2'-methylene-bis-6-(1-methylcyclohexyl)-para-cresol, 3,4-dihydro-2,5,7,8-tetramethyl-2-(4,8,12-trimethyltridecyl)-2H-1-benzopyran-6-ol, 2,4-dimethyl-6-(1-methyl-cyclohexyl)phenol, N,N'-hexamethylene bis-(3,5-di-*t*-butyl-4-hydroxyhydrocinnamamide), C₃-C₁₅ alkyl esters of 3,5-bis(1,1-dimethyl)-4-hydroxybenzenepropanoic acid, or mixtures thereof; antioxidants based on vitamin E, or mixtures thereof; or mixtures thereof;
(ii₂) antioxidants based on organic phosphites such as, for example, tris-(2,4-di-*t*-butylphenyl)phosphite, tris-2,4-bis(1,1-dimethylpropyl) phenylphosphite, tris-4-(1,1-dimethylpropyl)phenylphosphite, bis-[2,4-bis(1,1-dimethylpropyl)phenyl][4-(1,1-dimethylpropyl)phenyl]phosphite, [2,4-bis(1,1-dimethylpropyl)phenyl]bis[4-(1,1-dimethylpropyl)phenyl]phosphite, bis[tris-(2,4-di-*t*-butyl-phenyl)phosphite plus distearyl-3,3-thiodipropionate (about 3% by weight on weight of the phosphite), bis-(2,4-di-*t*-butyl-phenyl)pentaerythritol-diphosphite, tetrakis-(2,4-di-*t*-butyl-phenyl)-4,4'-biphenylene-diphosphonite, tris-(*p*-nonylphenyl) phosphite, di-*iso*-decyl-phenylphosphite, diphenyl-*iso*-decyl phosphite, tri-*iso*-decyl phosphite, trilauryl-phosphite, or mixtures thereof; organic phosphonates; organic phosphonites; organic phosphates such as, for example, di(stearyl)pentaerythritol diphosphite, tetrakis (2,4-di-*t*-butylphenyl)-4,4'-biphenylene diphosphonite, or mixtures thereof; or mixtures thereof;
or mixtures thereof.

Specific examples of antioxidants that can be advantageously used for the purpose of the present invention and that are currently available on the market are: Anox^{®} 1315 by Addivant (sterically hindered phenol), Weston^{®} 705 by Addivant (phosphite), Irgafos^{®} 168 by Basf (phosphite), Irganox^{®} E 201 by Basf (antioxidant based on vitamin E). According to a preferred embodiment of the present invention, said first additive selected from liquid stabilizers at room temperature (ii) can comprise:
- from 10% by weight to 90% by weight, preferably from 20% by weight to 80% by weight, with respect to the total weight of said liquid stabilizer, of an antioxidant selected from (iii) phenol-based antioxidants;
- from 10% by weight to 90% by weight, preferably from 20% by weight to 80% by weight, with respect to the total weight of said liquid stabilizer, of an antioxidant selected from (ii₂) antioxidants based on organic phosphites.

According to a preferred embodiment of the present invention, said organic solvent (iii) can be selected, for example, from: high boiling point aromatic solvents such as, for example, benzene, methylbenzene, ethylbenzene, xylene, toluene, or mixtures thereof; hydrocarbon solvents with a low aromatic content (i.e. aromatic content ≤ 0.1) such as, for example, hydrocarbon solvents of the Spirdane^{®} series of Total (e.g., Spirdane^{®} D60), or mixtures thereof; or mixtures thereof. Ethylbenzene is preferred.

According to a preferred embodiment of the present invention, said second additive (iv) can be selected, for example, from:
- light stabilizers, such as sterically hindered amines;
- UV stabilizers (UV absorbers), such as, for example: triazines, benzooxazinones, benzotriazoles, benzophenones, benzoates, formamidines, cinnamates or propenoates, aromatic propandions, benzoimidazoles, cycloaliphatic ketones, formanilides including oxamides, cyanoacrylates, benzopyranones, salicylates, or mixtures thereof;
- metallic stearates, such as zinc stearate, calcium stearate, magnesium stearate, or mixtures thereof;
- alcohols such as, for example, *iso*-propanol, *n*-propanol, *iso*-butanol, *n*-butanol, or mixtures thereof;
- ketones such as, for example, acetone, methyl-ethyl ketone, dibenzyl ketone, cyclohexanone, or mixtures thereof;
- ethers such as, for example, ethyl ether, diethyl ether, butyl ether, dibutyl ether, diphenyl ether, dibenzyl ether, or mixtures thereof;
- glycols or poly-alkylene glycols such as, for example, ethylene glycol, propylene glycol, polyethylene glycol, polypropylene glycol, or mixtures thereof;
or mixtures thereof.

Specific examples of sterically hindered amines that can be advantageously used for the purpose of the present invention and that are currently available on the market are: Tinuvin^{®} 292, Tinuvin^{®} 1130 by Ciba.

Specific examples of UV stabilizers (UV absorbers) that can be advantageously used for the purpose of the present invention and that are currently available on the market are the products Chimassorb^{®} 81 by Basf (benzophenone), Ciba^{®} Tinuvin^{®} 326 by Ciba (benzotriazole).

As mentioned above, the present invention also relates to a process for preparing the aforesaid polymer composition.

Therefore, further subject matter of the present invention is also a process for the preparation of a polymer composition as defined by claim 13.

In particular, said process comprises the following steps:
(a₁) preparing said paste with a high concentration of exfoliated layered material;
(b₁) adding the paste with a high concentration of exfoliated layered material obtained in step (a₁) to at least one polymer or homopolymer of ethylene, thus obtaining said polymer composition.

According to a preferred embodiment of the present invention, said step (a₁) comprises the following steps:
(a₂) mixing at least one first additive selected from liquid stabilizers at room temperature, preferably at least one antioxidant selected from (ii₁) phenol based antioxidants and at least one antioxidant selected from (ii₂) antioxidants based on organic phosphites with, optionally, at least one organic solvent and/or, optionally, at least one second additive selected from: light stabilizers, ultraviolet ray stabilizers (UV absorbers), metal stearates, alcohols, ketones, ethers, glycols or poly-alkylene glycols, to obtain a mixture;
(a₃) adding at least one exfoliated layered material to the mixture obtained in step (a₂) and subjecting it to mixing, obtaining a paste with a high concentration of an exfoliated layered material;
(a₄) recovering the paste obtained in step (a₃).

According to a preferred embodiment of the present invention, said step (a₂) can be carried out at a temperature ranging from 10°C to 50°C, preferably ranging from 20°C to 30°C, for a time ranging from 1 minute to 60 minutes, preferably ranging from 2 minutes to 40 minutes, at a rotation speed ranging from 100 rpm to 4000 rpm, preferably ranging from 1500 rpm to 3000 rpm.

According to a preferred embodiment of the present invention, said step (a₃) can be carried out at a temperature ranging from 10°C to 50°C, preferably ranging from 20°C to 30°C, for a time ranging from 1 minute to 60 minutes, preferably ranging from 2 minutes to 40 minutes, at a rotation speed ranging from 100 rpm to 4000 rpm, preferably ranging from 1500 rpm to 3000 rpm.

For the purpose of obtaining a more uniform paste with a high concentration of exfoliated layered material, said step (a₂) is preferably carried out in a planetary mixer that allows the simultaneous mixing and de-airing of the mixture.

According to a preferred embodiment of the present invention, said step (b₁) can be carried out at a temperature ranging from 10°C to 50°C, preferably ranging from 20°C to 30°C, for a time ranging from 1 minute to 40 minutes, preferably ranging from 2 minutes to 30 minutes, at a rotation speed ranging from 100 rpm to 4000 rpm, preferably ranging from 1500 rpm to 3000 rpm.

Said step (b₁) can be advantageously carried out in a turbomixer.

According to a preferred embodiment of the present invention, the polymer composition obtained in said step (b₁) can be fed to an extruder, operating under the following conditions:
- extrusion temperature ranging from 100°C to 300°C, preferably ranging from 150°C to 200°C; preferably at constant temperature along the extruder;
- residence time in the extruder ranging from 1 minute to 40 minutes, preferably ranging from 2 minutes to 30 minutes;
- extrusion pressure ranging from 10 bar to 40 bar, preferably ranging from 15 bar to 30 bar; preferably at constant pressure along the extruder;
- screw rotation speed ranging from 50 rpm to 300 rpm, preferably ranging from 80 rpm to 150 rpm.

At the end of extrusion, the polymer composition obtained can be recovered, for example, in the form of "spaghetti" and, subsequently, cooled to room temperature and granulated: further details can be found in the examples reported below.

According to a further embodiment of the present invention, the process according to the present invention can comprise the following steps:
(i) feeding at least one polymer or homopolymer of ethylene to an extruder, obtaining a polymer or homopolymer of molten ethylene;
(ii) subsequently, feeding to said extruder, the paste with a high concentration of exfoliated layered material obtained according to step (a₁) obtaining a polymer composition;
(iii) recovering the polymer composition obtained in step (ii).

According to a preferred embodiment of the present invention, said step (i) can be carried out under the following operating conditions:
- extrusion temperature ranging from 100°C to 300°C, preferably ranging from 150°C to 200°C; preferably at constant temperature along the extruder;
- residence time in the extruder ranging from 1 minute to 40 minutes, preferably ranging from 2 minutes to 30 minutes;
- extrusion pressure ranging from 10 bar to 40 bar, preferably ranging from 15 bar to 30 bar; preferably at constant pressure along the extruder;
- screw rotation speed ranging from 50 rpm to 300 rpm, preferably ranging from 80 rpm to 150 rpm.

According to a preferred embodiment of the present invention, said step (ii) can be carried out under the following operating conditions:
- extrusion temperature ranging from 100°C to 300°C, preferably ranging from 150°C to 200°C; preferably at constant temperature along the extruder;
- residence time in the extruder ranging from 1 minute to 40 minutes, preferably ranging from 2 minutes to 30 minutes;
- extrusion pressure ranging from 10 bar to 40 bar, preferably ranging from 15 bar to 30 bar; preferably at constant pressure along the extruder;
- screw rotation speed ranging from 50 rpm to 300 rpm, preferably ranging from 80 rpm to 150 rpm.

At the end of extrusion, the polymer composition obtained can be recovered, for example, in the form of "spaghetti" and, subsequently, cooled to room temperature and granulated: further details can be found in the examples reported below.

For the purpose of the aforesaid process, said extruder may be, for example, a single-screw extruder or a co-rotating or counter-rotating twin-screw extruder, preferably a co-rotating twin-screw extruder.

For the purpose of the aforesaid process, the feeding of the polymer or homopolymer of ethylene and the paste with a high concentration of exfoliated layered material to the extruder can be carried out through devices known in the state of the art such as, for example, dosing pumps, metering devices. In particular, the paste with a high concentration of exfoliated layered material can be fed to the extruder through heated dosing pumps for the purpose of increasing the fluidity thereof.

As mentioned above, the present invention also relates to the manufactured articles obtained from the aforesaid polymer composition.

Consequently, the present invention also relates to the manufactured articles obtained from the aforesaid polymer composition.

For the purpose of understanding the present invention better and to put it into practice, below are some illustrative and non-limiting examples thereof.

### EXAMPLE 1

### Preparation of graphene

For the purpose, the exfoliation system described and claimed in patent application WO 2017/089987 reported above was used.

3 g of graphite flakes (Aldrich) were dispersed in 300 ml of *N*-methyl-2-pyrrolidone (NMP): the dispersion obtained was loaded into an exfoliation station including a nozzle device for wet-jet milling operating under the following conditions:
- temperature: room temperature (25°C);
- pressure: ranging from 150 to 250 MPa;
- number of wet-jet milling cycles: 3;
- duration for each cycle: ranging from 1.2 to 2.25 minutes.

At the end of said wet-jet milling cycles, everything was transferred into a rotary evaporator for the purpose of removing the solvent used and the exfoliated material obtained was dispersed again in 100 ml of dimethylsulfoxide (DMS) (Aldrich), poured into an aluminum container and frozen at -28°C. Subsequently, the solid obtained was transferred to a freeze-dryer and heated to 20°C obtaining 3 g of a powder comprising graphene flakes having the following dimensions (the measurements are performed as reported above):
- lateral dimension (x, y) ranging from 5 nm to 5000 nm;
- thickness ranging from 0.3 nm to 10 nm;
- surface area: ranging from 50 m²/g to 2000 m²/g.

### EXAMPLE 2

### Preparation of graphene paste

The following were loaded into a planetary mixer, provided with a magnetic stirrer: 10 ml of Weston^{®} 705 (Addivant) (phosphite), 5 ml of Irganox^{®} E 201 by Basf (antioxidant based on vitamin E) and 0.75 ml of ethylbenzene (Aldrich): the mixture obtained was kept, under stirring, at 2000 rpm, at room temperature (25°C), for 3 minutes. Subsequently, 2.7 g of the powder comprising graphene flakes obtained as described in Example 1 were added to the mixture obtained: everything was left, under stirring, at 2000 rpm, at room temperature (25°C), for 35 minutes, obtaining 18.3 g of a graphene paste having the following concentration:
- graphene: 14.8% by weight;
- Weston^{®} 705: 55.8% by weight;
- Irganox^{®} E 201: 25.9% by weight;
- ethylbenzene: 3.5% by weight.

For the purpose of understanding the present invention better and to put it into practice, below are some illustrative and non-limiting examples thereof.

### EXAMPLE 3 (comparison)

### Preparation of graphene paste in ethylbenzene

The following were loaded into a planetary mixer, provided with a magnetic stirrer: 0.5 g of exfoliated graphene obtained as described in Example 1 and 99.5 ml of ethylbenzene (Aldrich): the mixture obtained was kept, under stirring, at 2000 rpm, at room temperature (25°C), for 3 minutes.

### EXAMPLE 4 (comparison)

### Preparation of graphene paste in n-hexane

The following were loaded into a planetary mixer, provided with a magnetic stirrer: 0.5 g of exfoliated graphene obtained as described in Example 1 and 99.5 ml of *n*-hexane (Aldrich): the mixture obtained was kept, under stirring, at 2000 rpm, at room temperature (25°C), for 3 minutes.

### EXAMPLE 5 (invention)

97.9 parts of linear-low-density polyethylene (LLDPE) (Flexirene^{®} CL10 U by Versalis S.p.A.) nascent powder, and 2.1 parts of graphene paste obtained as described in Example 2, were loaded into a PLASMEC TRL10 turbomixer, and maintained under stirring at 1500 rpm, for 5 minutes, at room temperature (25°C). Subsequently, the mixture obtained was loaded into a co-rotating twin-screw extruder (D = 50 mm; LID = 14) with a die plate having cylindrical holes with a diameter of 3 mm, a length of 20 mm and flow rate per individual extrusion hole of 4.50 kg/h. Everything was extruded operating at a constant temperature profile of 200°C, at a constant pressure profile of 26 bar, at a flow rate of 4.50 kg/h per individual hole, and at a screw rotation speed of 100 rpm. The material extruded in "spaghetti" form was cooled in a water bath, dried in air and granulated using a chopper. Part of the granules obtained were compression molded at 240°C, 100 bar, for 5 minutes, obtaining a film of dimensions 200x200x0.2 mm which was subjected to both oxygen permeability analysis according to standard ASTM D3985-17, and to stress at break analysis according to standard ASTM D638-14: the data obtained are shown in Table 1.

### EXAMPLE 6 (comparative)

97.9 g of linear-low-density polyethylene (LLDPE) (Flexirene^{®} CL10 U by Versalis S.p.A.) nascent powder, and 2.1 g of graphene paste obtained as described in Example 3, were loaded into a PLASMEC TRL10 turbomixer, and maintained under stirring at 1500 rpm, for 5 minutes, at room temperature (25°C). Subsequently, the mixture obtained was subjected to the same process described in Example 5 and the film of dimensions 200x200x0.2 mm obtained was subjected to both oxygen permeability analysis according to standard ASTM D3985-17, and to stress at break analysis according to standard ASTM D638-14; the data obtained are shown in Table 1.

### EXAMPLE 7 (comparative)

97.9 g of linear-low-density polyethylene (LLDPE) (Flexirene^{®} CL10 U by Versalis S.p.A.) nascent powder, and 2.1 g of graphene paste obtained as described in Example 4, were loaded into a PLASMEC TRL10 turbomixer, and maintained under stirring at 1500 rpm, for 5 minutes, at room temperature (25°C), obtaining a mixture that it was not possible to extrude due to excessive fluidity.

### EXAMPLE 8 (comparative)

97.9 g of linear-low-density polyethylene (LLDPE) (Flexirene^{®} CL10 U by Versalis S.p.A.) nascent powder, and 2.1 g of a masterbatch of pure graphene nanoplates (70% by weight) in a polyolefin (ZAPP G+ by DirectaPlus), were loaded into a PLASMEC TRL10 turbomixer, and maintained under stirring at 1500 rpm, for 5 minutes, at room temperature (25°C). Subsequently, the mixture obtained was subjected to the same process described in Example 5 and the film of dimensions 200x200x0.2 mm obtained was subjected to both oxygen permeability analysis according to standard ASTM D3985-17, and to stress at break analysis according to standard ASTM D638-14: the data obtained are shown in Table 1.

**TABLE 1**

| EXAMPLE | Permeability to oxygen (mm/m²) (24 h, 23°C, 50% RH*) | Stress at break (MPa) |
|---|---|---|
| LLDPE powder (as such) | 160 | 16 |
| 5 (invention) | 60 | 18 |
| 6 (comparative) | 155 | 16 |
| 7 (comparative) | n. m.** | n. m.** |
| 8 (comparative) | 90 | 20 |

| | | |
|---|---|---|
| *: RH = relative humidity; **: not measurable. | | |

From the data shown in Table 1, it can be seen that the presence of the paste with a high concentration of graphene according to the present invention [Example 5 (invention)] allows manufactured articles to be obtained with improved barrier properties with respect both to linear-low-density polyethylene (LLDPE) as such and to linear-low-density polyethylene (LLDPE) with added graphene pastes known in the state of the art [Example 6 (comparative), Example 7 (comparative) and Example 8 (comparative)]. Furthermore, the presence of the paste with a high concentration of graphene according to the present invention [Example 5 (invention)] does not have a negative effect on the mechanical properties of the manufactured articles, in particular on the stress at break.

## Claims

1. Polymer composition comprising:
(a) at least one homopolymer or copolymer of ethylene;
(b) at least one paste with a high concentration of an exfoliated layered material comprising:
(i) from 1% by weight to 20% by weight, preferably from 10% by weight to 18% by weight, of at least one exfoliated layered material selected from graphene; graphene oxide; reduced graphene oxide; graphene nanoplates; boron nitride; phosphorene (monoatomic layer of black phosphorus); di- and tri-chalcogenides of transition metals such as tungsten disulfide (IV), tungsten diselenide (VI), molybdenum disulfide, bismuth tellurium; or mixtures thereof; preferably, it is selected from graphene, graphene nanoplates, or mixtures thereof;
(ii) from 10% by weight to 90% by weight, preferably from 15% by weight to 85% by weight, of at least one first additive selected from liquid stabilizers at room temperature, said at least one first additive being selected from: (ii₁) phenol-based antioxidants such as sterically hindered phenols; (ii₂) antioxidants based on organic phosphites;
(iii) from 0% by weight to 15% by weight, preferably from 3% by weight to 8% by weight, of at least one organic solvent;
(iv) from 0% by weight to 30% by weight, preferably from 5% by weight to 20% by weight, of at least one second additive selected from: light stabilizers, ultraviolet ray stabilizers (UV absorbers), metallic stearates, alcohols, ketones, ethers, glycols or poly-alkylene glycols;
the sum of (i) + (ii) + (iii) + (iv) being equal to 100.

2. Polymer composition according to claim 1, wherein said polymer composition comprises:
(a) from 90% by weight to 99.9% by weight, preferably from 95% by weight to 98% by weight, of at least one homopolymer or copolymer of ethylene;
(b) from 0.1% by weight to 10% by weight, preferably from 2% by weight to 5% by weight, of at least one paste with a high concentration of an exfoliated layered material comprising:
(i) from 1% by weight to 20% by weight, preferably from 10% by weight to 18% by weight, of at least one exfoliated layered material;
(ii) from 10% by weight to 90% by weight, preferably from 15% by weight to 85% by weight, of at least one first additive selected from liquid stabilizers at room temperature;
(iii) from 0% by weight to 15% by weight, preferably from 3% by weight to 8% by weight, of at least one organic solvent;
(iv) from 0% by weight to 30% by weight, preferably from 5% by weight to 20% by weight, of at least one second additive selected from: light stabilizers, ultraviolet ray stabilizers (UV absorbers), metallic stearates, alcohols, ketones, ethers, glycols or poly-alkylene glycols;
the sum of (i) + (ii) + (iii) + (iv) being equal to 100.

3. Polymer composition according to claim 1 or 2, wherein said homopolymer or copolymer of ethylene is selected from:
- high-density polyethylene (HDPE);
- medium-density polyethylene (MDPE);
- low-density polyethylene (LDPE);
- linear-low-density polyethylene (LLDPE), linear-very-low-density polyethylene (VLDPE), linear-ultra-low-density polyethylene (ULDPE), which are copolymers of ethylene with at least one aliphatic α-olefin having formula CH₂ = CH-R wherein R represents a linear or branched alkyl group, preferably linear, containing from 1 to 12 carbon atoms, selected, for example, from: propylene, 1-butene, 1-pentene, 1-hexene, 1-octene, 1-decene;
or mixtures thereof; preferably it is linear-low-density polyethylene (LLDPE).

4. Polymer composition according to any one of the preceding claims, wherein said paste with a high concentration of an exfoliated layered material comprises:
(i) from 1% by weight to 20% by weight, preferably from 10% by weight to 18% by weight, of at least one exfoliated layered material;
(ii) from 10% by weight to 90% by weight, preferably from 15% by weight to 85% by weight, of at least one first additive selected from liquid stabilizers at room temperature;
(iii) from 2% by weight to 15% by weight, preferably from 3% by weight to 8% by weight, of at least one organic solvent;
the sum of (i) + (ii) + (iii) being equal to 100.

5. Polymer composition according to any one of claims 1 to 3, wherein said paste with a high concentration of an exfoliated layered material comprises:
(i) from 1% by weight to 20% by weight, preferably from 10% by weight to 18% by weight, of at least one exfoliated layered material;
(ii) from 10% by weight to 90% by weight, preferably from 15% by weight to 85% by weight, of at least one first additive selected from liquid stabilizers at room temperature;
(iv) from 1% by weight to 30% by weight, preferably from 5% by weight to 20% by weight, of at least one second additive selected from: light stabilizers, ultraviolet ray stabilizers (UV absorbers), metallic stearates, alcohols, ketones, ethers, glycols or poly-alkylene glycols;
the sum of (i) + (ii) + (iv) being equal to 100.

6. Polymer composition according to any one of claims 1 to 3, wherein said paste with a high concentration of an exfoliated layered material comprises:
(i) from 1% by weight to 20% by weight, preferably from 10% by weight to 18% by weight, of at least one exfoliated layered material;
(ii) from 10% by weight to 90% by weight, preferably from 15% by weight to 85% by weight, of at least one first additive selected from liquid stabilizers at room temperature;
(iii) from 2% by weight to 15% by weight, preferably from 3% by weight to 8% by weight, of at least one organic solvent;
(iv) from 1% by weight to 30% by weight, preferably from 5% by weight to 20% by weight, of at least one second additive selected from: light stabilizers, ultraviolet ray stabilizers (UV absorbers), metallic stearates, alcohols, ketones, ethers, glycols or poly-alkylene glycols;
the sum of (i) + (ii) + (iii) + (iv) being equal to 100.

7. Polymer composition according to any of the previous claims wherein, said at least one exfoliated layered material (i) is selected from graphene, graphene nanoplates, or mixtures thereof.

8. Polymer composition according to any one of the previous claims, wherein:
- the particles of said exfoliated layered material (i) have a lateral dimension (x,y) not higher than 10000 nm, preferably ranging from 4 nm to 5500 nm; and/or
- the particles of said exfoliated layered material (i) have a thickness (z) not higher than 50 nm, preferably ranging from 0.2 nm to 15 nm; and/or
- the particles of said exfoliated layered material (i) have a surface area higher than 10 m²/g, preferably higher than 40 m²/g; and/or
- the particles of said exfoliated layered material (a) have a surface area ranging from 20 m²/g to 3000 m²/g, preferably ranging from 30 m²/g to 2600 m²/g.

9. Polymer composition according to any one of the previous claims, wherein
(iii) said phenol-based antioxidants are selected from sterically hindered phenols such as 2,6-di-*t*-butyl-4-methylphenol, 2,6-di-*t*-butyl-4-nonyl-phenol, 2,2'-methylene-bis-(4-methyl-6-*t*-butyl-phenol), 4,4'-butylidene-bis-(2-*t*-butyl-5-methyl-phenol), 4,4'-thio-bis-(2-*t*-butyl-5-methyl-phenol), 2,2'-thio-bis(6-*t*-butyl-4-methyl-phenol), 2,5-di-*t*-amyl-hydroquinone; sterically hindered polymer phenols; tris-(3,5-di-*t*-butyl-4-hydroxybenzyl)isocyanurate, 2,2'-thiodietylbis-(3,5-di-*t*-butyl-4-hydroxyphenyl)propionate, 1,1,3-tris-(2'-methyl-4'-hydroxy-5'-*t-*butyl-phenyl)butane, 2,2'-methylene-bis-6-(1-methylcyclohexyl)-para-cresol, 3,4-dihydro-2,5,7,8-tetramethyl-2-(4,8,12-trimethyltridecyl)-2H-1-benzopyran-6-ol, 2,4-dimethyl-6-(1-methyl-cyclohexyl)phenol, N,N'-hexamethylene bis-(3,5-di-*t*-butyl-4-hydroxy-hydrocinnamamide), C₃-C₁₅ alkyl esters of 3,5-bis(1,1-dimethyl)-4-hydroxy-benzenepropanoic acid, or mixtures thereof; antioxidants based on vitamin E, or mixtures thereof; or mixtures thereof;
(ii₂) said antioxidants based on organic phosphites are selected from tris-(2,4-di-*t-*butyl-phenyl)phosphite, tris-2,4-bis(1,1-dimethylpropyl)phenylphosphite, tris-4-(1,1-dimethylpropyl)phenylphosphite, bis-[2,4-bis(1,1-dimethylpropyl)phenyl][4-(1,1-dimethylpropyl)phenyl]phosphite, [2,4-bis(1,1-dimethylpropyl)phenyl]bis[4-(1,1-dimethylpropyl)phenyl]phosphite, bis[tris-(2,4-di-*t*-butyl-phenyl)phosphite plus distearyl-3,3-thiodipropionate (about 3% by weight of the weight of the phosphite), bis-(2,4-di-*t*-butylphenyl)pentaerythritol-diphosphite, tetrakis-(2,4-di-*t*-butyl-phenyl)-4,4'-biphenylene-diphosphonite, tris-(*p*-nonylphenyl)phosphite, di-*iso*-decyl-phenylphosphite, diphenyl-*iso-*decyl-phosphite, tri-*iso*-decyl-phosphite, trilauryl-phosphite, or mixtures thereof; organic phosphonates; organic phosphonites; organic phosphates such as, for example, di(stearyl) pentaerythritol diphosphite, tetrakis (2,4-di-t-butylphenyl)-4,4'-biphenylene diphosphonite, or mixtures thereof; or mixtures thereof;
or mixtures thereof.

10. Polymer composition according to claim 9, wherein said first additive selected from liquid stabilizers at room temperature (ii) comprises:
- from 10% by weight to 90% by weight, preferably from 20% by weight to 80% by weight, with respect to the total weight of said liquid stabilizer, of an antioxidant selected from (ii₁) phenol-based antioxidants;
- from 10% by weight to 90% by weight, preferably from 20% by weight to 80% by weight, with respect to the total weight of said liquid stabilizer, of an antioxidant selected from (ii₂) antioxidants based on organic phosphites.

11. Polymer composition according to any one of the preceding claims, wherein said organic solvent (iii) is selected from: high boiling point aromatic solvents such as: benzene, methylbenzene, ethylbenzene, xylene, toluene, or mixtures thereof; hydrocarbon solvents with a low aromatic content (i.e., aromatic content ≤ 0.1) such as hydrocarbon solvents of the Spirdane^{®} series of Total (e.g., Spirdane^{®} D60), or mixtures thereof; or mixtures thereof; preferably it is ethylbenzene.

12. Polymer composition according to any one of the preceding claims, wherein said second additive (iv) is selected from:
- light stabilizers such as sterically hindered amines ;
- UV stabilizers (UV absorbers) such as: triazines, benzooxazinones, benzotriazoles, benzophenones, benzoates, formamidines, cinnamates or propenoates, aromatic propandions, benzoimidazoles, cycloaliphatic ketones, formanilides including oxamides, cyanoacrylates, benzopyranones, salicylates, or mixtures thereof;
- metallic stearates such as zinc stearate, calcium stearate, magnesium stearate, or mixtures thereof;
- alcohols such as *iso-*propanol, *n*-propanol, *iso-*butanol, *n*-butanol, or mixtures thereof;
- ketones such as acetone, methyl-ethyl ketone, dibenzyl ketone, cyclohexanone, or mixtures thereof;
- ethers such as ethyl ether, diethyl ether, butyl ether, dibutyl ether, diphenyl ether, dibenzyl ether, or mixtures thereof;
- glycols or poly-alkylene glycols such as ethylene glycol, propylene glycol, polyethylene glycol, polypropylene glycol, or mixtures thereof; or mixtures thereof.

13. Process for the preparation of a polymer composition according to any one of the preceding claims, comprising the following steps:
(a₁) preparing said paste with a high concentration of exfoliated layered material;
(b₁) adding the paste with a high concentration of exfoliated layered material obtained in step (a₁) to at least one polymer or homopolymer of ethylene, thus obtaining said polymer composition.

14. Process for the preparation of a polymer composition according to claim 13, wherein said step (a₁) comprises the following steps:
(a₂) mixing at least one first additive selected from liquid stabilizers at room temperature, preferably at least one antioxidant selected from (iii) phenol based antioxidants and at least one antioxidant selected from (ii₂) antioxidants based on organic phosphites with, optionally, at least one organic solvent and/or, optionally, at least one second additive selected from: light stabilizers, ultraviolet ray stabilizers (UV absorbers), metallic stearates, alcohols, ketones, ethers, glycols or poly-alkylene glycols, to obtain a mixture;
(a₃) adding at least one exfoliated layered material to the mixture obtained in step (a₂) and subjecting it to mixing, obtaining a paste with a high concentration of an exfoliated layered material;
(a₄) recovering the paste obtained in step (a₃)

15. Process for the preparation of a polymer composition according to claim 14, wherein:
- said step (a₂) is carried out at a temperature ranging from 10°C to 50°C, preferably ranging from 20°C to 30°C, for a time ranging from 1 minute to 60 minutes, preferably ranging from 2 minutes to 40 minutes, at a rotation speed ranging from 100 rpm to 4000 rpm, preferably ranging from 1500 rpm to 3000 rpm; and/or
- said step (a₃) is carried out at a temperature ranging from 10°C to 50° C, preferably ranging from 20°C to 30°C, for a period of time ranging from 1 minute to 60 minutes, preferably ranging from 2 minutes to 40 minutes, at a rotation speed ranging from 100 rpm to 4000 rpm, preferably ranging from 1500 rpm to 3000 rpm.

16. Process for the preparation of a polymer composition according to any one of claims 13 to 15, wherein said step (b₁) is carried out at a temperature ranging from 10°C to 50°C, preferably ranging from 20°C to 30°C, for a time ranging from 1 minute to 40 minutes, preferably ranging from 2 minutes to 30 minutes, at a rotation speed ranging from 100 rpm to 4000 rpm, preferably ranging from 1500 rpm to 3000 rpm.

17. Process for the preparation of a polymer composition according to any one of claims 13 to 16, wherein the polymer composition obtained in said step (b₁) is fed to an extruder, operating under the following conditions:
- extrusion temperature ranging from 100°C to 300°C, preferably ranging from 150° C to 200° C; preferably at constant temperature along the extruder;
- residence time in the extruder ranging from 1 minute to 40 minutes, preferably ranging from 2 minutes to 30 minutes;
- extrusion pressure ranging from 10 bar to 40 bar, preferably ranging from 15 bar to 30 bar; preferably at constant pressure along the extruder;
- screw rotation speed ranging from 50 rpm to 300 rpm, preferably ranging from 80 rpm to 150 rpm.

18. Process for the preparation of a polymer composition according to any one of claims 1 to 12,
comprising the following steps:
(i) feeding at least one polymer or homopolymer of ethylene to an extruder, obtaining a polymer or homopolymer of molten ethylene;
(ii) subsequently, feeding to said extruder, the paste with a high concentration of exfoliated layered material obtained according to step (a₁) obtaining a polymer composition;
(iii) recovering the polymer composition obtained in step (ii).

19. Process for the preparation of a polymer composition according to claim 18, wherein:
- said step (i) is carried out under the following operating conditions:
- extrusion temperature ranging from 100°C to 300°C, preferably ranging from 150°C to 200°C; preferably at constant temperature along the extruder;
- residence time in the extruder ranging from 1 minute to 40 minutes, preferably ranging from 2 minutes to 30 minutes;
- extrusion pressure ranging from 10 bar to 40 bar, preferably ranging from 15 bar to 30 bar; preferably at constant pressure along the extruder;
- screw rotation speed ranging from 50 rpm to 300 rpm, preferably ranging from 80 rpm to 150 rpm; and/or
- said step (ii) is carried out under the following operating conditions:
- extrusion temperature ranging from 100°C to 300°C, preferably ranging from 150°C to 200°C; preferably at constant temperature along the extruder;
- residence time in the extruder ranging from 1 minute to 40 minutes, preferably ranging from 2 minutes to 30 minutes;
- extrusion pressure ranging from 10 bar to 40 bar, preferably ranging from 15 bar to 30 bar; preferably at constant pressure along the extruder;
- screw rotation speed ranging from 50 rpm to 300 rpm, preferably ranging from 80 rpm to 150 rpm.

20. Manufactured articles obtained from the polymer composition according to any one of the previous claims.

## Patentansprüche

1. Polymerzusammensetzung, umfassend:
(a) zumindest ein Homopolymer oder Copolymer von Ethylen;
(b) zumindest eine Paste mit einer hohen Konzentration eines exfolierten Schichtmaterials, umfassend:
(i) von 1 Gew.-% bis 20 Gew.-%, vorzugsweise von 10 Gew.-% bis 18 Gew.-%, zumindest eines exfolierten Schichtmaterials ausgewählt aus Graphen; Graphenoxid; reduziertem Graphenoxid; Graphen-Nanoplatten; Bornitrid; Phosphoren (monoatomare Schicht aus schwarzem Phosphor); Di- und Trichalkogenide von Übergangsmetallen wie Wolframdisulfid (IV), Wolframdiselenid (VI), Molybdändisulfid, Wismuttellur; oder Mischungen davon; vorzugsweise ist es ausgewählt aus Graphen, Graphen-Nanoplatten oder Mischungen davon;
(ii) von 10 Gew.-% bis 90 Gew.-%, vorzugsweise von 15 Gew.-% bis 85 Gew.-%, zumindest eines ersten Zusatzstoffs ausgewählt aus flüssigen Stabilisatoren bei Raumtemperatur, wobei der zumindest eine erste Zusatzstoff ausgewählt ist aus: (ii₁) phenolbasierten Antioxidantien wie sterisch gehinderten Phenolen; (ii₂) Antioxidantien auf Basis organischer Phosphite;
(iii) von 0 Gew.-% bis 15 Gew.-%, vorzugsweise von 3 Gew.-% bis 8 Gew.-%, zumindest eines organischen Lösungsmittels;
(iv) von 0 Gew.-% bis 30 Gew.-%, vorzugsweise von 5 Gew.-% bis 20 Gew.-%, zumindest eines zweiten Zusatzstoffs ausgewählt aus: Lichtstabilisatoren, Ultraviolettstrahlenstabilisatoren (UV-Absorber), Metallstearaten, Alkoholen, Ketonen, Ethern, Glykolen oder Polyalkylenglykolen;
wobei die Summe aus (i) + (ii) + (iii) + (iv) gleich 100 ist.

2. Polymerzusammensetzung nach Anspruch 1, wobei die Polymerzusammensetzung umfasst:
(a) von 90 Gew.-% bis 99,9 Gew.-%, vorzugsweise von 95 Gew.-% bis 98 Gew.-%, zumindest eines Homopolymers oder Copolymers von Ethylen;
(b) von 0,1 Gew.-% bis 10 Gew.-%, vorzugsweise von 2 Gew.-% bis 5 Gew.-%, zumindest einer Paste mit einer hohen Konzentration eines exfolierten Schichtmaterials, umfassend:
(i) von 1 Gew.-% bis 20 Gew.-%, vorzugsweise von 10 Gew.-% bis 18 Gew.-%, zumindest eines exfolierten Schichtmaterials;
(ii) von 10 Gew.-% bis 90 Gew.-%, vorzugsweise von 15 Gew.-% bis 85 Gew.-%, zumindest eines ersten Additivs ausgewählt aus flüssigen Stabilisatoren bei Raumtemperatur;
(iii) von 0 Gew.-% bis 15 Gew.-%, vorzugsweise von 3 Gew.-% bis 8 Gew.-%, zumindest eines organischen Lösungsmittels;
(iv) von 0 Gew.-% bis 30 Gew.-%, vorzugsweise von 5 Gew.-% bis 20 Gew.-%, zumindest eines zweiten Zusatzstoffs ausgewählt aus: Lichtstabilisatoren, Ultraviolettstrahlenstabilisatoren (UV-Absorbern), Metallstearaten, Alkoholen, Ketonen, Ethern, Glykolen oder Polyalkylenglykolen;
wobei die Summe aus (i) + (ii) + (iii) + (iv) gleich 100 ist.

3. Polymerzusammensetzung nach Anspruch 1 oder 2, wobei das Homopolymer oder Copolymer von Ethylen ausgewählt ist aus:
- Polyethylen hoher Dichte (HDPE);
- Polyethylen mittlerer Dichte (MDPE);
- Polyethylen niedriger Dichte (LDPE);
- linearem Polyethylen niedriger Dichte (LLDPE), linearem Polyethylen sehr niedriger Dichte (VLDPE), linearem Polyethylen ultraniedriger Dichte (ULDPE), die Copolymere von Ethylen mit zumindest einem aliphatischen α-Olefin mit der Formel CH₂ = CH-R sind, wobei R eine lineare oder verzweigte Alkylgruppe darstellt, vorzugsweise linear, mit 1 bis 12 Kohlenstoffatomen, ausgewählt beispielsweise aus: Propylen, 1-Buten, 1-Penten, 1-Hexen, 1-Octen, 1-Decen;
oder Mischungen davon; wobei es vorzugsweise lineares Polyethylen niedriger Dichte (LLDPE) ist.

4. Polymerzusammensetzung nach einem der vorhergehenden Ansprüche, wobei die Paste mit einer hohen Konzentration eines exfolierten Schichtmaterials umfasst:
(i) von 1 Gew.-% bis 20 Gew.-%, vorzugsweise von 10 Gew.-% bis 18 Gew.-%, zumindest eines exfolierten Schichtmaterials;
(ii) von 10 Gew.-% bis 90 Gew.-%, vorzugsweise von 15 Gew.-% bis 85 Gew.-%, zumindest eines ersten Zusatzstoffs ausgewählt aus flüssigen Stabilisatoren bei Raumtemperatur;
(iii) von 2 Gew.-% bis 15 Gew.-%, vorzugsweise von 3 Gew.-% bis 8 Gew.-%, zumindest eines organischen Lösungsmittels;
wobei die Summe aus (i) + (ii) + (iii) + (iv) gleich 100 ist.

5. Polymerzusammensetzung nach einem der Ansprüche 1 bis 3, wobei die Paste mit einer hohen Konzentration eines exfolierten Schichtmaterials umfasst:
(i) von 1 Gew.-% bis 20 Gew.-%, vorzugsweise von 10 Gew.-% bis 18 Gew.-%, zumindest eines exfolierten Schichtmaterials;
(ii) von 10 Gew.-% bis 90 Gew.-%, vorzugsweise von 15 Gew.-% bis 85 Gew.-%, zumindest eines ersten Zusatzstoffs ausgewählt aus flüssigen Stabilisatoren bei Raumtemperatur;
(iv) von 1 Gew.-% bis 30 Gew.-%, vorzugsweise von 5 Gew.-% bis 20 Gew.-%, zumindest eines zweiten Zusatzstoffs ausgewählt aus: Lichtstabilisatoren, Ultraviolettstrahlenstabilisatoren (UV-Absorbern), Metallstearaten, Alkoholen, Ketonen, Ethern, Glykolen oder Polyalkylenglykolen;
wobei die Summe aus (i) + (ii) + (iii) + (iv) gleich 100 ist.

6. Polymerzusammensetzung nach einem der Ansprüche 1 bis 3, wobei die Paste mit einer hohen Konzentration eines exfolierten Schichtmaterials umfasst:
(i) von 1 Gew.-% bis 20 Gew.-%, vorzugsweise von 10 Gew.-% bis 18 Gew.-%, zumindest eines exfolierten Schichtmaterials;
(ii) von 10 Gew.-% bis 90 Gew.-%, vorzugsweise von 15 Gew.-% bis 85 Gew.-%, zumindest eines ersten Zusatzstoffs ausgewählt aus flüssigen Stabilisatoren bei Raumtemperatur;
(iii) von 2 Gew.-% bis 15 Gew.-%, vorzugsweise von 3 Gew.-% bis 8 Gew.-%, zumindest eines organischen Lösungsmittels;
(iv) von 1 Gew.-% bis 30 Gew.-%, vorzugsweise von 5 Gew.-% bis 20 Gew.-%, zumindest eines zweiten Zusatzstoffs ausgewählt aus: Lichtstabilisatoren, Ultraviolettstrahlenstabilisatoren (UV-Absorbern), Metallstearaten, Alkoholen, Ketonen, Ethern, Glykolen oder Polyalkylenglykolen;
wobei die Summe aus (i) + (ii) + (iii) + (iv) gleich 100 ist.

7. Polymerzusammensetzung nach einem der vorhergehenden Ansprüche, wobei das zumindest eine exfolierte Schichtmaterial (i) ausgewählt ist aus Graphen, Graphen-Nanoplatten oder Mischungen davon.

8. Polymerzusammensetzung nach einem der vorhergehenden Ansprüche, wobei:
- die Partikel des exfolierten Schichtmaterials (i) eine laterale Abmessung (x, y) von nicht mehr als 10000 nm, vorzugsweise in dem Bereich von 4 nm bis 5500 nm, aufweisen; und/oder
- die Partikel des exfolierten Schichtmaterials (i) eine Dicke (z) von nicht mehr als 50 nm, vorzugsweise in dem Bereich von 0,2 nm bis 15 nm, aufweisen; und/oder
- die Partikel des exfolierten Schichtmaterials (i) einen Flächen- bzw. Oberflächenbereich von mehr als 10 m²/g, vorzugsweise mehr als 40 m²/g aufweisen; und/oder
- die Partikel des exfolierten Schichtmaterials (a) einen Flächen- bzw. Oberflächenbereich in dem Bereich von 20 m²/g bis 3000 m²/g, vorzugsweise in dem Bereich von 30 m²/g bis 2600 m²/g aufweisen.

9. Polymerzusammensetzung nach einem der vorhergehenden Ansprüche, wobei
(iii) die Antioxidantien auf Phenolbasis ausgewählt sind aus sterisch gehinderten Phenolen wie 2,6-Di-*t*-butyl-4-methylphenol, 2,6-di-*t*-butyl-4-nonylphenol, 2,2'-Methylen-bis-(4-methyl-6-*t*-butylphenol), 4,4'-Butyliden-bis-(2-*t*-butyl-5-methylphenol), 4,4'-Thio-bis-(2-*t*-butyl-5-methylphenol), 2,2'-Thio-bis(6-*t*-butyl-4-methylphenol), 2,5-Di-*t*-amyl-hydrochinon; sterisch gehinderten Polymerphenolen; Tris-(3,5-di-*t*-butyl-4-hydroxybenzyl)isocyanurat, 2,2'-Thiodietylbis-(3,5-di-*t*-butyl-4-hydroxyphenyl)propionat, 1,1,3-Tris-(2'-methyl-4'-hydroxy-5'-*t-*butylphenyl)butan, 2,2'-Methylen-bis-6-(1-methylcyclohexyl)-para-kresol, 3,4-Dihydro-2,5,7,8-tetramethyl-2-(4,8,12-trimethyltridecyl)-2H-1-benzopyran-6-ol, 2,4-Dimethyl-6-(1-methyl-cyclohexyl)phenol, N,N'-Hexamethylen-bis-(3,5-di-t-butyl-4-hydroxy-hydrocinnamamid), C₃-C₁₅-Alkylester von 3,5-Bis(1,1-dimethyl)-4-hydroxy-benzolpropansäure oder Mischungen davon; Antioxidantien auf Basis von Vitamin E oder Mischungen davon; oder Mischungen davon;
(ii₂) die Antioxidantien auf Basis organischer Phosphite ausgewählt sind aus Tris-(2,4-di-*t*-butylphenyl)phosphit, Tris-2,4-bis(1,1-dimethylpropyl)phenylphosphit, Tris-4-(1,1-dimethylpropyl)phenylphosphit, Bis-[2,4-bis(1,1-dimethylpropyl)phenyl][4-(1,1-dimethylpropyl)phenyl]phosphit, [2,4-Bis(1,1-dimethylpropyl)phenyl]bis[4-(1,1-dimethylpropyl)phenyl]phosphit, Bis[tris-(2,4-di-*t*-butylphenyl]phosphit plus Distearyl-3,3-thiodipropionat (etwa 3 Gew.-% des Gewichts des Phosphits), Bis-(2,4-di-*t-*butylphenyl)pentaerythritol-diphosphit, Tetrakis-(2,4-di-t-butylphenyl)-4,4'-biphenylen-diphosphonit, Tris-(p-nonylphenyl)phosphit, Di-*iso*-decylphenylphosphit, Diphenyl-*iso*-decylphosphit, Tri-*iso*-decylphosphit, Trilaurylphosphit oder Mischungen davon; organische Phosphonate; organische Phosphonite; organische Phosphate wie beispielsweise Di(stearyl)pentaerythrit-diphosphit, Tetrakis-(2,4-di-t-butylphenyl)-4,4'-biphenylen-diphosphonit oder Mischungen davon; oder Mischungen davon;
oder Mischungen davon.

10. Polymerzusammensetzung nach Anspruch 9, wobei der erste Zusatzstoff, ausgewählt aus flüssigen Stabilisatoren bei Raumtemperatur (ii), umfasst:
- von 10 Gew.-% bis 90 Gew.-%, vorzugsweise von 20 Gew.-% bis 80 Gew.-%, bezogen auf das Gesamtgewicht des flüssigen Stabilisators, eines Antioxidans ausgewählt aus (ii₁) Antioxidantien auf Phenolbasis;
- von 10 Gew.-% bis 90 Gew.-%, vorzugsweise von 20 Gew.-% bis 80 Gew.-%, bezogen auf das Gesamtgewicht des flüssigen Stabilisators, eines Antioxidans ausgewählt aus (ii₂) Antioxidantien auf Basis organischer Phosphite.

11. Polymerzusammensetzung nach einem der vorhergehenden Ansprüche, wobei das organische Lösungsmittel (iii) ausgewählt ist aus: aromatischen Lösungsmitteln mit hohem Siedepunkt wie:
Benzol, Methylbenzol, Ethylbenzol, Xylol, Toluol oder Mischungen davon; Kohlenwasserstofflösungsmittel mit einem niedrigen Aromatengehalt (d. h. Aromatengehalt ≤ 0,1) wie Kohlenwasserstofflösungsmittel der Spirdane^{®}-Reihe von Total (z. B. Spirdane^{®} D60) oder Mischungen davon; oder Mischungen davon; wobei es vorzugsweise Ethylbenzol ist.

12. Polymerzusammensetzung nach einem der vorhergehenden Ansprüche, wobei der zweite Zusatzstoff (iv) ausgewählt ist aus:
- Lichtstabilisatoren wie sterisch gehinderten Aminen;
- UV-Stabilisatoren (UV-Absorbern) wie: Triazine, Benzoxazinone, Benzotriazole, Benzophenone, Benzoate, Formamidine, Zimtsäureester oder Propensäureester, aromatische Propandionen, Benzoimidazole, cycloaliphatische Ketone, Formaniliden einschließlich Oxamiden, Cyanacrylaten, Benzopyranonen, Salicylaten oder Mischungen davon;
- Metallstearate wie Zinkstearat, Calciumstearat, Magnesiumstearat oder Mischungen davon;
- Alkohole wie *Iso*propanol, *n*-Propanol, *Iso*butanol, *n*-Butanol oder Mischungen davon;
- Ketone wie Aceton, Methylethylketon, Dibenzylketon, Cyclohexanon oder Mischungen davon;
- Ether wie Ethylether, Diethylether, Butylether, Dibutylether, Diphenylether, Dibenzylether oder Mischungen davon;
- Glykole oder Polyalkylenglykole wie Ethylenglykol, Propylenglykol, Polyethylenglykol, Polypropylenglykol oder Mischungen davon; oder Mischungen davon.

13. Verfahren zur Herstellung einer Polymerzusammensetzung nach einem der vorhergehenden Ansprüche, umfassend die folgenden Schritte:
(a₁) Herstellen der Paste mit einer hohen Konzentration eines exfolierten Schichtmaterials;
(b₁) Hinzufügen der Paste mit einer hohen Konzentration eines exfolierten Schichtmaterials, die in Schritt (a₁) erhalten wird, zu zumindest einem Polymer oder Homopolymer von Ethylen, wodurch die Polymerzusammensetzung erhalten wird.

14. Verfahren zur Herstellung einer Polymerzusammensetzung nach Anspruch 13, wobei Schritt (a₁) die folgenden Schritte umfasst:
(a₂) Mischen zumindest eines ersten Zusatzstoffs ausgewählt aus flüssigen Stabilisatoren bei Raumtemperatur, vorzugsweise zumindest eines Antioxidans ausgewählt aus (ii₁) Antioxidantien auf Phenolbasis und zumindest eines Antioxidans ausgewählt aus (ii₂) Antioxidantien auf Basis organischer Phosphite, mit optional zumindest einem organischen Lösungsmittel und/oder optional zumindest einem zweiten Zusatzstoff ausgewählt aus: Lichtstabilisatoren, Ultraviolettstrahlenstabilisatoren (UV-Absorbern), Metallstearaten, Alkoholen, Ketonen, Ethern, Glykolen oder Polyalkylenglykolen, um eine Mischung zu erhalten;
(a₃) Hinzufügen zumindest eines exfolierten Schichtmaterials zu der in Schritt (a₂) erhaltenen Mischung und Unterziehen derselben einem Mischen, wodurch eine Paste mit einer hohen Konzentration eines exfolierten Schichtmaterials erhalten wird;
(a₄) Rückgewinnen der in Schritt (a₃) erhaltenen Paste.

15. Verfahren zur Herstellung einer Polymerzusammensetzung nach Anspruch 14, wobei:
- der Schritt (a₂) bei einer Temperatur in dem Bereich von 10°C bis 50°C, vorzugsweise in dem Bereich von 20°C bis 30°C, für eine Zeit in dem Bereich von 1 Minute bis 60 Minuten, vorzugsweise in dem Bereich von 2 Minuten bis 40 Minuten, bei einer Rotationsgeschwindigkeit bzw. Drehzahl in dem Bereich von 100 U/min bis 4000 U/min, vorzugsweise in dem Bereich von 1500 U/min bis 3000 U/min, durchgeführt wird; und/oder
- der Schritt (a₃) bei einer Temperatur in dem Bereich von 10°C bis 50°C, vorzugsweise in dem Bereich von 20°C bis 30°C, für einen Zeitraum in dem Bereich von 1 Minute bis 60 Minuten, vorzugsweise in dem Bereich von 2 Minuten bis 40 Minuten, bei einer Rotationsgeschwindigkeit bzw. Drehzahl in dem Bereich von 100 U/min bis 4000 U/min, vorzugsweise in dem Bereich von 1500 U/min bis 3000 U/min, durchgeführt wird.

16. Verfahren zur Herstellung einer Polymerzusammensetzung nach einem der Ansprüche 13 bis 15, wobei der Schritt (b₁) bei einer Temperatur in dem Bereich von 10°C bis 50°C, vorzugsweise in dem Bereich von 20°C bis 30°C, für einen Zeitraum in dem Bereich von 1 Minute bis 40 Minuten, vorzugsweise in dem Bereich von 2 Minuten bis 30 Minuten, bei einer Rotationsgeschwindigkeit bzw. Drehzahl in dem Bereich von 100 U/min bis 4000 U/min, vorzugsweise in dem Bereich von 1500 U/min bis 3000 U/min, durchgeführt wird.

17. Verfahren zur Herstellung einer Polymerzusammensetzung nach einem der Ansprüche 13 bis 16, wobei die in Schritt (b₁) erhaltene Polymerzusammensetzung einem Extruder zugeführt wird, der unter den folgenden Bedingungen arbeitet:
- Extrusionstemperatur in dem Bereich von 100°C bis 300°C, vorzugsweise in dem Bereich von 150°C bis 200°C; vorzugsweise bei konstanter Temperatur entlang des Extruders;
- Verweilzeit in dem Extruder in dem Bereich von 1 Minute bis 40 Minuten, vorzugsweise in dem Bereich von 2 Minuten bis 30 Minuten;
- Extrusionsdruck in dem Bereich von 10 bar bis 40 bar, vorzugsweise in dem Bereich von 15 bar bis 30 bar; vorzugsweise bei konstantem Druck entlang des Extruders;
- Schneckendrehzahl bzw. -rotationsgeschwindigkeit in dem Bereich von 50 U/min bis 300 U/min, vorzugsweise in dem Bereich von 80 U/min bis 150 U/min.

18. Verfahren zur Herstellung einer Polymerzusammensetzung nach einem der Ansprüche 1 bis 12,
umfassend die folgenden Schritte:
(i) Zuführen zumindest eines Polymers oder Homopolymers von Ethylen zu einem Extruder, wodurch ein Polymer oder Homopolymer von geschmolzenem Ethylen erhalten wird;
(ii) anschließendes Zuführen der Paste mit einer hohen Konzentration eines exfolierten Schichtmaterials, die gemäß Schritt (a₁) erhalten wird, zu dem Extruder, wodurch eine Polymerzusammensetzung erhalten wird;
(iii) Rückgewinnen der in Schritt (ii) erhaltenen Polymerzusammensetzung.

19. Verfahren zur Herstellung einer Polymerzusammensetzung nach Anspruch 18, wobei:
- der Schritt (i) unter den folgenden Betriebsbedingungen durchgeführt wird:
- Extrusionstemperatur in dem Bereich von 100°C bis 300°C, vorzugsweise in dem Bereich von 150°C bis 200°C; vorzugsweise bei konstanter Temperatur entlang des Extruders;
- Verweilzeit in dem Extruder in dem Bereich von 1 Minute bis 40 Minuten, vorzugsweise in dem Bereich von 2 Minuten bis 30 Minuten;
- Extrusionsdruck in dem Bereich von 10 bar bis 40 bar, vorzugsweise in dem Bereich von 15 bar bis 30 bar; vorzugsweise bei konstantem Druck entlang des Extruders;
- Schneckendrehzahl bzw. -rotationsgeschwindigkeit in dem Bereich von 50 U/min bis 300 U/min, vorzugsweise in dem Bereich von 80 U/min bis 150 U/min; und/oder
- der Schritt (ii) unter den folgenden Betriebsbedingungen durchgeführt wird:
- Extrusionstemperatur in dem Bereich von 100°C bis 300°C, vorzugsweise in dem Bereich von 150°C bis 200°C; vorzugsweise bei konstanter Temperatur entlang des Extruders;
- Verweilzeit im Extruder von 1 Minute bis 40 Minuten, vorzugsweise von 2 Minuten bis 30 Minuten;
- Extrusionsdruck in dem Bereich von 10 bar bis 40 bar, vorzugsweise in dem Bereich von 15 bar bis 30 bar; vorzugsweise bei konstantem Druck entlang des Extruders;
- Schneckendrehzahl bzw. -rotationsgeschwindigkeit in dem Bereich von 50 U/min bis 300 U/min, vorzugsweise in dem Bereich von 80 U/min bis 150 U/min.

20. Hergestellte Artikel, die aus der Polymerzusammensetzung gemäß einem der vorhergehenden Ansprüche erhalten werden.

## Revendications

1. Composition de polymère comprenant :
(a) au moins un homopolymère ou un copolymère d'éthylène ;
(b) au moins une pâte à concentration élevée en matériau stratifié exfolié comprenant :
(i) de 1 % en poids à 20 % en poids, de préférence de 10 % en poids à 18 % en poids d'au moins un matériau stratifié exfolié sélectionné parmi le graphène ; l'oxyde de graphène ; l'oxyde de graphène réduit ; les nanoplaques de graphène ; le nitrure de bore ; le phosphorène (couche monoatomique de phosphore noir) ; les di- et tri-chalcogénures de métaux de transition tels que le disulfure de tungstène (IV), le diséléniure de tungstène (VI), le disulfure de molybdène, le tellure de bismuth ; ou les mélanges de ceux-ci ; de préférence, il est sélectionné parmi le graphène, les nanoplaques de graphène ou les mélanges de ceux-ci ;
(ii) de 10 % en poids à 90 % en poids, de préférence de 15 % en poids à 85 % en poids d'au moins un premier additif sélectionné parmi les stabilisants liquides à température ambiante, ledit au moins un premier additif étant sélectionné parmi : (ii₁) les antioxydants à base de phénol tels que les phénols stériquement encombrés ; (ii₂) les antioxydants à base de phosphites organiques ;
(iii) de 0 % en poids à 15 % en poids, de préférence de 3 % en poids à 8 % en poids d'au moins un solvant organique ;
(iv) de 0 % en poids à 30 % en poids, de préférence de 5 % en poids à 20 % en poids d'au moins un deuxième additif sélectionné parmi : les photostabilisants, les stabilisants anti-rayons ultraviolets (absorbeurs UV), les stéarates métalliques, les alcools, les cétones, les éthers, les glycols ou les polyalkylèneglycols ;
la somme (i) + (ii) + (iii) + (iv) étant égale à 100.

2. Composition de polymère selon la revendication 1, dans laquelle ladite composition de polymère comprend :
(a) de 90 % en poids à 99,9 % en poids, de préférence de 95 % en poids à 98 % en poids, d'au moins un homopolymère ou copolymère d'éthylène ;
(b) de 0,1 % en poids à 10 % en poids, de préférence de 2 % en poids à 5 % en poids, d'au moins une pâte à concentration élevée en matériau stratifié exfolié comprenant :
(i) de 1 % en poids à 20 % en poids, de préférence de 10 % en poids à 18 % en poids, d'au moins un matériau stratifié exfolié ;
(ii) de 10 % en poids à 90 % en poids, de préférence de 15 % en poids à 85 % en poids, d'au moins un premier additif sélectionné parmi les stabilisants liquides à température ambiante ;
(iii) de 0 % en poids à 15 % en poids, de préférence de 3 % en poids à 8 % en poids, d'au moins un solvant organique ;
(iv) de 0 % en poids à 30 % en poids, de préférence de 5 % en poids à 20 % en poids, d'au moins un deuxième additif sélectionné parmi : les photostabilisants, les stabilisants anti-rayons ultraviolets (absorbeurs UV), les stéarates métalliques, les alcools, les cétones, les éthers, les glycols ou les polyalkylèneglycols ;
la somme (i) + (ii) + (iii) + (iv) étant égale à 100.

3. Composition de polymère selon la revendication 1 ou 2, dans laquelle ledit homopolymère ou copolymère d'éthylène est sélectionné parmi :
- un polyéthylène haute densité (HDPE) ;
- un polyéthylène moyenne densité (MDPE) ;
- un polyéthylène basse densité (LDPE) ;
- un polyéthylène linéaire basse densité (LLDPE), un polyéthylène linéaire très basse densité (VLDPE), un polyéthylène linéaire ultra basse densité (ULDPE), qui sont des copolymères d'éthylène avec au moins une α-oléfine aliphatique de formule CH₂=CH-R dans laquelle R représente un groupe alkyle linéaire ou ramifié, de préférence linéaire, contenant de 1 à 12 atomes de carbone, sélectionnée par exemple parmi : le propylène, le 1-butène, le 1-pentène, le 1-hexène, le 1-octène, 1-décène ; ou
les mélanges de ceux-ci ; de préférence c'est un polyéthylène linéaire basse densité (LLDPE).

4. Composition de polymère selon l'une quelconque des revendications précédentes, dans laquelle ladite pâte à concentration élevée en matériau stratifié exfolié comprend :
(i) de 1 % en poids à 20 % en poids, de préférence de 10 % en poids à 18 % en poids, d'au moins un matériau stratifié exfolié ;
(ii) de 10 % en poids à 90 % en poids, de préférence de 15 % en poids à 85 % en poids, d'au moins un premier additif sélectionné parmi les stabilisants liquides à température ambiante ;
(iii) de 2 % en poids à 15 % en poids, de préférence de 3 % en poids à 8 % en poids, d'au moins un solvant organique ;
la somme (i) + (ii) + (iii) étant égale à 100.

5. Composition de polymère selon l'une quelconque des revendications 1 à 3, dans laquelle ladite pâte à concentration élevée en matériau stratifié exfolié comprend :
(i) de 1 % en poids à 20 % en poids, de préférence de 10 % en poids à 18 % en poids, d'au moins un matériau stratifié exfolié ;
(ii) de 10 % en poids à 90 % en poids, de préférence de 15 % en poids à 85 % en poids, d'au moins un premier additif sélectionné parmi les stabilisants liquides à température ambiante ;
(iv) de 1 % en poids à 30 % en poids, de préférence de 5 % en poids à 20 % en poids, d'au moins un deuxième additif sélectionné parmi : les photostabilisants, les stabilisants anti-rayons ultraviolets (absorbeurs UV), les stéarates métalliques, les alcools, les cétones, les éthers, les glycols ou les polyalkylèneglycols ;
la somme (i) + (ii) + (iv) étant égale à 100.

6. Composition de polymère selon l'une quelconque des revendications 1 à 3, dans laquelle ladite pâte à concentration élevée en matériau stratifié exfolié comprend :
(i) de 1 % en poids à 20 % en poids, de préférence de 10 % en poids à 18 % en poids, d'au moins un matériau stratifié exfolié ;
(ii) de 10 % en poids à 90 % en poids, de préférence de 15 % en poids à 85 % en poids, d'au moins un premier additif sélectionné parmi les stabilisants liquides à température ambiante ;
(iii) de 2 % en poids à 15 % en poids, de préférence de 3 % en poids à 8 % en poids, d'au moins un solvant organique ;
(iv) de 1 % en poids à 30 % en poids, de préférence de 5 % en poids à 20 % en poids, d'au moins un deuxième additif sélectionné parmi : les photostabilisants, les stabilisants anti-rayons ultraviolets (absorbeurs UV), les stéarates métalliques, les alcools, les cétones, les éthers, les glycols ou les polyalkylèneglycols ;
la somme (i) + (ii) + (iii) + (iv) étant égale à 100.

7. Composition de polymère selon l'une quelconque des revendications précédentes, dans laquelle ledit au moins un matériau stratifié exfolié (i) est sélectionné parmi le graphène, les nanoplaques de graphène ou les mélanges de ceux-ci.

8. Composition de polymère selon l'une quelconque des revendications précédentes, dans laquelle :
- les particules dudit matériau stratifié exfolié (i) présentent une dimension latérale (x, y) non supérieure à 10 000 nm, allant de préférence de 4 nm à 5500 nm ; et/ou
- les particules dudit matériau stratifié exfolié (i) présentent une épaisseur (z) non supérieure à 50 nm, de préférence de 0,2 nm à 15 nm ; et/ou
- les particules dudit matériau stratifié exfolié (i) présentent une surface spécifique supérieure à 10 m²/g, de préférence supérieure à 40 m²/g ; et/ou
- les particules dudit matériau stratifié exfolié (a) présentent une surface spécifique allant de 20 m²/g à 3000 m²/g, de préférence allant de 30 m²/g à 2600 m²/g.

9. Composition de polymère selon l'une quelconque des revendications précédentes, dans laquelle
(ii₁) lesdits antioxydants à base de phénol sont sélectionnés parmi les phénols stériquement encombrés tels que le 2,6-di-*t*-butyl-4-méthylphénol, le 2,6-di-*t*-butyl-4-nonyl-phénol, le 2,2'-méthylène-bis-(4-méthyl-6-*t*-butyl-phénol), le 4,4'-butylidène-bis-(2-*t*-butyl-5-méthyl-phénol), le 4,4'-thio-bis-(2-*t*-butyl-5-méthyl-phénol), le 2,2'-thio-bis(6-*t*-butyl-4-méthyl-phénol), la 2,5-di-*t*-amyl-hydroquinone ; les phénols polymères stériquement encombrés ; l'isocyanurate de tris-(3,5-di-*t*-butyl-4-hydroxybenzyle), le propionate de 2,2'-thiodiéthylbis-(3,5-di*t*-butyl-4-hydroxyphényle), le 1,1,3-tris-(2'-méthyl-4'-hydroxy-5'-*t*-butyl-phényl)butane, le 2,2'-méthylène-bis-6-(1-méthylcyclohexyl)-para-crésol, le 3,4-dihydro-2,5,7,8-tétraméthyl-2-(4,8,12-triméthyltridécyl)-2H-1-benzopyran-6-ol, le 2,4-diméthyl-6-(1-méthyl-cyclohexyl)phénol, le N,N'-hexaméthylène bis-(3,5-di-*t*-butyl-4-hydroxy-hydrocinnamamide), les esters d'alkyle en C₃ à C₁₅ de l'acide 3,5-bis(1,1-diméthyl)-4-hydroxy-benzènepropanoïque, ou les mélanges de ceux-ci ; les antioxydants à base de vitamine E, ou les mélanges de celles-ci ; ou les mélanges de ceux-ci ;
(ii₂) lesdits antioxydants à base de phosphites organiques sont sélectionnés parmi le tris-(2,4-di-t-butyl-phényl)phosphite, le tris-2,4-bis(1,1-diméthylpropyl)-phénylphosphite, le tris-4-(1,1-diméthylpropyl)phénylphosphite, le bis-[2,4-bis(1,1-diméthylpropyl)phényl][4-(1,1-diméthylpropyl)phényl]phosphite, le [2,4-bis(1,1-diméthylpropyl)phényl]bis[4-(1,1-diméthylpropyl)phényl]phosphite, le bis[tris-(2,4-di-*t*-butyl-phényl)phosphite plus 3,3-thiodipropionate de distéaryle (environ 3 % en poids du poids du phosphite), le bis-(2,4-di-*t*-butyl-phényl)pentaérythritol-diphosphite, le tétrakis-(2,4-di-*t*-butyl-phényl)-4,4'-biphénylène-diphosphonite, le tris-(*p*-nonylphényl)phosphite, le di-*iso-*décyl-phényl-phosphite, le diphényl-*iso*-décyl-phosphite, le tri-*iso*-décyl-phosphite, le trilauryl-phosphite, ou les mélanges de ceux-ci ; les phosphonates organiques ; les phosphonites organiques ; les phosphates organiques tels que, par exemple, le di(stéaryl)pentaérythritoldiphosphite, le tétrakis(2,4-di-t-butylphényl)-4,4'-biphénylènediphosphonite, ou les mélanges de ceux-ci ; ou les mélanges de ceux-ci ;
ou les mélanges de ceux-ci.

10. Composition de polymère selon la revendication 9, dans laquelle ledit premier additif sélectionné parmi les stabilisants liquides à température ambiante (ii) comprend :
- de 10 % en poids à 90 % en poids, de préférence de 20 % en poids à 80 % en poids, par rapport au poids total dudit stabilisant liquide, d'un antioxydant sélectionné parmi (ii₁) les antioxydants à base de phénol ;
- de 10 % en poids à 90 % en poids, de préférence de 20 % en poids à 80 % en poids, par rapport au poids total dudit stabilisant liquide, d'un antioxydant sélectionné parmi (ii₂) les antioxydants à base de phosphites organiques.

11. Composition de polymère selon l'une quelconque des revendications précédentes, dans laquelle ledit solvant organique (iii) est sélectionné parmi : les solvants aromatiques à point d'ébullition élevé tels que : le benzène, le méthylbenzène, l'éthylbenzène, le xylène, le toluène, ou les mélanges de ceux-ci ; les solvants hydrocarbonés à faible teneur en aromatiques (c'est-à-dire, une teneur en aromatiques ≤ 0,1) tels que les solvants hydrocarbonés de la série Spirdane^{®} de Total (par exemple, le Spirdane^{®} D60), ou les mélanges de ceux-ci ; ou les mélanges de ceux-ci ; de préférence c'est l'éthylbenzène.

12. Composition de polymère selon l'une quelconque des revendications précédentes, dans laquelle ledit deuxième additif (iv) est sélectionné parmi :
- les photostabilisants tels que les amines stériquement encombrées ;
- les stabilisants anti-UV (absorbeurs UV) tels que : les triazines, les benzooxazinones, les benzotriazoles, les benzophénones, les benzoates, les formamidines, les cinnamates ou propènoates, les propandions aromatiques, les benzoimidazoles, les cétones cycloaliphatiques, les formanilides comprenant les oxamides, les cyanoacrylates, les benzopyranones, les salicylates, ou les mélanges de ceux-ci ;
- les stéarates métalliques tels que le stéarate de zinc, le stéarate de calcium, le stéarate de magnésium ou les mélanges de ceux-ci ;
- les alcools tels que l'*iso*-propanol, le *n*-propanol, l'*iso*-butanol, le *n-*butanol ou les mélanges de ceux-ci ;
- les cétones telles que l'acétone, la méthyl-éthylcétone, la dibenzylcétone, la cyclohexanone, ou les mélanges de celles-ci ;
- les éthers tels que l'éthyléther, le diéthyléther, le butyléther, le dibutyléther, le diphényléther, le dibenzyléther, ou les mélanges de ceux-ci ;
- les glycols ou polyalkylèneglycols tels que l'éthylèneglycol, le propylèneglycol, un polyéthylèneglycol, un polypropylèneglycol, ou les mélanges de ceux-ci ; ou les mélanges de ceux-ci.

13. Procédé de préparation d'une composition de polymère selon l'une quelconque des revendications précédentes, comprenant les étapes suivantes :
(a₁) la préparation de ladite pâte à concentration élevée en matériau stratifié exfolié ;
(b₁) l'ajout de la pâte à concentration élevée en matériau stratifié exfolié obtenue dans l'étape (a₁) à au moins un polymère ou homopolymère d'éthylène, pour ainsi obtenir ladite composition de polymère.

14. Procédé de préparation d'une composition de polymère selon la revendication 13, dans lequel ladite étape (a₁) comprend les étapes suivantes :
(a₂) le mélange d'au moins un premier additif sélectionné parmi les stabilisants liquides à température ambiante, de préférence au moins un antioxydant sélectionné parmi (ii₁) les antioxydants à base de phénol et au moins un antioxydant sélectionné parmi (ii₂) les antioxydants à base de phosphites organiques avec, facultativement, au moins un solvant organique et/ou, facultativement, au moins un deuxième additif sélectionné parmi : les photostabilisants, les stabilisants anti-rayons ultraviolets (absorbeurs UV), les stéarates métalliques, les alcools, les cétones, les éthers, les glycols ou les polyalkylèneglycols, pour obtenir un mélange ;
(a₃) l'ajout d'au moins un matériau stratifié exfolié au mélange obtenu dans l'étape (a₂) et sa soumission à un mélange, pour obtenir une pâte à concentration élevée en matériau stratifié exfolié ;
(a₄) la récupération de la pâte obtenue dans l'étape (a₃)

15. Procédé de préparation d'une composition de polymère selon la revendication 14, dans lequel :
- ladite étape (a₂) est réalisée à une température allant de 10 °C à 50 °C, de préférence allant de 20 °C à 30 °C, pendant une durée allant de 1 minute à 60 minutes, de préférence allant de 2 minutes à 40 minutes, à une vitesse de rotation allant de 100 tr/min à 4000 tr/min, de préférence allant de 1500 tr/min à 3000 tr/min ; et/ou
- ladite étape (a₃) est réalisée à une température allant de 10 °C à 50 °C, de préférence allant de 20 °C à 30 °C, pendant une durée allant de 1 minute à 60 minutes, de préférence allant de 2 minutes à 40 minutes, à une vitesse de rotation allant de 100 tr/min à 4000 tr/min, de préférence allant de 1500 tr/min à 3000 tr/min.

16. Procédé de préparation d'une composition de polymère selon l'une quelconque des revendications 13 à 15, dans lequel ladite étape (b₁) est réalisée à une température allant de 10 °C à 50 °C, de préférence allant de 20 °C à 30 °C, pendant une durée allant de 1 minute à 40 minutes, de préférence allant de 2 minutes à 30 minutes, à une vitesse de rotation allant de 100 tr/min à 4000 tr/min, de préférence allant de 1500 tr/min à 3000 tr/min.

17. Procédé de préparation d'une composition de polymère selon l'une quelconque des revendications 13 à 16, dans lequel la composition de polymère obtenue dans ladite étape (b₁) est introduite dans une extrudeuse, fonctionnant dans les conditions suivantes :
- température d'extrusion allant de 100 °C à 300 °C, de préférence allant de 150 °C à 200 °C ; de préférence à température constante le long de l'extrudeuse ;
- temps de séjour dans l'extrudeuse allant de 1 minute à 40 minutes, de préférence allant de 2 minutes à 30 minutes ;
- pression d'extrusion allant de 10 bar à 40 bar, de préférence allant de 15 bar à 30 bar ; de préférence à pression constante le long de l'extrudeuse ;
- vitesse de rotation de la vis allant de 50 tr/min à 300 tr/min, de préférence allant de 80 tr/min à 150 tr/min.

18. Procédé de préparation d'une composition de polymère selon l'une quelconque des revendications 1 à 12,
comprenant les étapes suivantes :
(i) l'introduction d'au moins un polymère ou homopolymère d'éthylène dans une extrudeuse, pour obtenir un polymère ou homopolymère d'éthylène fondu ;
(ii) ensuite, l'introduction dans ladite extrudeuse de la pâte à concentration élevée en matériau stratifié exfolié obtenue selon l'étape (a₁) pour obtenir une composition de polymère ;
(iii) la récupération de la composition de polymère obtenue dans l'étape (ii).

19. Procédé de préparation d'une composition de polymère selon la revendication 18, dans lequel :
- ladite étape (i) est réalisée dans les conditions de fonctionnement suivantes :
- température d'extrusion allant de 100 °C à 300 °C, de préférence allant de 150 °C à 200 °C ; de préférence à température constante le long de l'extrudeuse ;
- temps de séjour dans l'extrudeuse allant de 1 minute à 40 minutes, de préférence allant de 2 minutes à 30 minutes ;
- pression d'extrusion allant de 10 bar à 40 bar, de préférence allant de 15 bar à 30 bar ; de préférence à pression constante le long de l'extrudeuse ;
- vitesse de rotation de la vis allant de 50 tr/min à 300 tr/min, de préférence allant de 80 tr/min à 150 tr/min ; et/ou
- ladite étape (ii) est réalisée dans les conditions de fonctionnement suivantes :
- température d'extrusion allant de 100 °C à 300 °C, de préférence allant de 150 °C à 200 °C ; de préférence à température constante le long de l'extrudeuse ;
- temps de séjour dans l'extrudeuse allant de 1 minute à 40 minutes, de préférence allant de 2 minutes à 30 minutes ;
- pression d'extrusion allant de 10 bar à 40 bar, de préférence allant de 15 bar à 30 bar ; de préférence à pression constante le long de l'extrudeuse ;
- vitesse de rotation de la vis allant de 50 tr/min à 300 tr/min, de préférence allant de 80 tr/min à 150 tr/min.

20. Articles manufacturés obtenus à partir de la composition de polymère selon l'une quelconque des revendications précédentes.
